# EUROPEAN PATENT APPLICATION

(11) **EP 4 239 539 A1**
(43) Date of publication of application: **06.09.2023**
(21) Application number: 21885571.6
(22) Date of filing: 11.03.2021
(51) Int. Cl.: G06Q 10/00, H04N 7/15, G06F 13/00

(54) **NETWORK SYSTEM AND CONTROL DEVICE**

(30) Priority: 27.10.2020 JP 2020179810
(71) Applicant: OMRON Corporation, Kyoto 600-8530 (JP)
(72) Inventor: OKA, Minoru, Kyoto-shi, Kyoto 600-8530 (JP); NAGATA, Yuta, Kyoto-shi, Kyoto 600-8530 (JP); KOBAYASHI, Yoshiaki, Muko-shi, Kyoto 617-0002 (JP); WATANABE, Yuya, Muko-shi, Kyoto 617-0002 (JP); KUSAKA, Takenori, Muko-shi, Kyoto 617-0002 (JP)
(74) Representative: Mewburn Ellis LLP
(86) International application number: PCT/JP2021/009840
(87) International publication number: WO 2022/091446

(57) **Abstract**

An electronic conference where a user to be involved in correspondence of an event is invited is held. In the electronic conference, a server device receives data including at least one of an image and a voice from at least one of a terminal device (300) and a control device (100) connected through a network, and distributes the received data to a device different from a transmission source of the data. When the control device detects the event, in a network system (1), a convocation notice to the electronic conference corresponding to the event is transmitted to at least one user to be involved in correspondence of the event through the network.

## Description

### TECHNICAL FIELD

The present disclosure relates to a network system including a control device that controls a control target.

### BACKGROUND ART

Conventionally, a system that accesses information about a device operating in a remote place through a network is known. Such the system is also used for the purpose of specifying a factor of an abnormal operation or failure of the device from the remote place and supporting recovery when the abnormal operation or failure is generated.

For example, Japanese Patent Laying-Open No. 2019-101964 (PTL 1) discloses an electronic conference system that enables an interactive maintenance activity in a maintenance scene from the remote place.

### CITATION LIST

### PATENT LITERATURE

PTL 1: Japanese Patent Laying-Open No. 2019-101964

### SUMMARY OF INVENTION

### TECHNICAL PROBLEM

In a production field such as a factory, when an abnormality or an event is generated in a machine or the like of a control target, an electronic conference in which a user to be involved in correspondence of the abnormality or an event participates is required to be held. Because the user participating in the electronic conference system disclosed in Japanese Patent Laying-Open No. 2019-101964 (PTL 1) do not adopt a configuration that is selectively determined according to the generated event, the abnormality or the event cannot be correspond even when the electronic conference is held.

For this reason, it is desired that an environment for holding the electronic conference in which user participates in and corresponds to the event indicating a matter generated in relation to the control target.

### SOLUTION TO PROBLEM

A network system of the present disclosure is a network system for an electronic conference in which a plurality of users interact by transmitting and receiving data by a plurality of computers connected to a network. A plurality of computers includes at least one terminal device, a control device that controls a target, and a server device that receives data including at least one of an image and a voice from at least one of the terminal device and the control device that are connected through a network in the electronic conference and distributes the received data to a device different from a transmission source of the data.

The control device includes means configured to execute a control arithmetic operation and detection means configured to detect an event indicating a matter generated in association with the target from an operation state of the target according to control. The network system includes means configured to transmit a convocation notice to an electronic conference in order to correspond to the event to at least one user to be involved in correspondence of the event through the network when detecting the event by the detection means.

According to the above disclosure, when the control device detects the event, the network system transmits the convocation notice to the electronic conference in order to correspond to the event to at least one user to be involved in the correspondence of the event. Accordingly, in response to the detection of the event by the control device, the user to be involved in the correspondence can be invited to the electronic conference for the event correspondence.

In the above disclosure, the control device includes a storage that stores setting information defining a user who can access data held by the control device, and the control device determines at least one user to be involved in the correspondence of the event according to the setting information.

According to the above disclosure, the user who is invited to the electronic conference can be limited to the user who can access the data held by the control device, or the accessible user can be included in the user to be invited to the electronic conference.

In the above disclosure, the control device performs outgoing call to start a network connection to the server device when detecting the event.

According to the above disclosure, because the control device starts network connection at the time of event detection, in other words, the control device does not connect to the network in a scene other than event detection, the possibility of attack (for example, a security attack) on the control device through the network can be prevented.

In the above disclosure, the control device includes means configured to transmit the convocation notice to the electronic conference.

According to the above disclosure, the control device can perform from the detection of the event to the transmission of the convocation notice.

In the above disclosure, the plurality of computers further includes a support device that monitors an operational condition of the control device at a time of controlling the target on a screen, and in the electronic conference, the terminal device connected through the network outputs a screen based on information about the screen received from the support device connected through the network to a display of the terminal device.

According to the above disclosure, in the electronic conference, the user can monitor the operational condition of the control device at the time of controlling the target from the screen based on the screen information received from the support device by the terminal device.

In the electronic conference, the terminal device connected through the network transfers operation information received from a user of the terminal device to the support device connected through the network, and the support device transfers information about the screen corresponding to the operation information from the terminal device to the terminal device.

According to the above disclosure, in the electronic conference, the user can remotely operate the support device through the terminal device to monitor the screen of the support device in response to the operation of the terminal device with the terminal device.

In the above disclosure, the operational condition includes an operation state of a target that operates in accordance with a command calculated by control arithmetic operation.

According to the above disclosure, in the electronic conference, the user remotely operates the support device through the terminal device, and can monitor the operation state of the target operating according to the command calculated by the control arithmetic operation as the operational condition related to the control device on the screen in response to the operation.

In the above-described disclosure, the network system further includes means configured to store history information indicating a history of a result of the correspondence for each type of the event for which the correspondence is performed.

According to the above disclosure, the history of the result of the correspondence can be accumulated and stored for each type of event for which the correspondence is performed in the electronic conference.

In the above disclosure, the history information includes user information identifying a user involved in the correspondence of the event in association with each type of the event for which the correspondence is performed, and the means configured to transmit the convocation notice includes means configured to transmit the convocation notice to a user indicated by the user information in the history information associated with an event of a type identical to the event detected by the detection means.

According to the above disclosure, the user who has experienced the response to the event of the type identical to the event detected in the control device in the past can be included in the destination of the convocation notice transmitted when the event is detected.

In the above disclosure, the correspondence of the event includes determining at least one factor of the event indicated by the event, the history information includes factor information indicating the at least one factor determined in response to the correspondence of the event in association with each type of the event for which the correspondence is performed, and the means configured to transmit the convocation notice includes the factor information in the history information associated with an event of the type identical to the event detected by the detection means, in the convocation notice to be transmitted.

According to the above disclosure, the information about the factor determined in the past electronic conference for the matter of the type identical to the event can be included in the convocation notice transmitted when the event is detected. Accordingly, the user can obtain the candidate information about the factor in which the matter corresponding to the currently-detected event generated from the information about the factor determined in the past electronic conference included in the convocation notice.

In the above disclosure, the history information includes reference information referring to data distributed to the terminal device in an electronic conference corresponding to the event in association with each type of the event for which the correspondence is performed, and the means configured to transmit the convocation notice includes the reference information in the history information associated with an event of the type identical to the event detected by the detection means, in the convocation notice to be transmitted.

According to the above disclosure, reference information about data referred to in the past in order to correspond to the event of the type identical to the event can be included in the convocation notice transmitted when the event is detected. Accordingly, the user can acquire a data candidate referred to in order to correspond to the event detected this time from the reference information included in the convocation notice.

In the present disclosure, a control device that controls a target, the control device includes: communication means configured to be capable of network-connecting to a server device and at least one terminal device; means configured to perform a control arithmetic operation; and detection means configured to detect an event indicating a matter generated in association with the target from an operation state of the target according to control, in which the server device receives data including at least one of an image and a voice from at least one of the terminal device and the control device that are connected through the network in an electronic conference, and distributes the received data to a device different from a transmission source of the data, the terminal device includes a terminal device capable of being operated by a user, and the control device further includes means configured to transmit a holding request of the electronic conference in which at least one user to be involved in correspondence of the event is invited when detecting the event, to the server device through the network.

According to the above disclosure, when detecting the event, the control device transmits the convocation notice to the electronic conference in order to correspond to the event to at least one user to be involved in the correspondence of the event. Accordingly, in response to the detection of the event by the control device, the user to be involved in the correspondence can be invited to the electronic conference for the event correspondence.

In the above disclosure, the control device includes a storage that stores setting information defining a user who can access data held by the control device, and the control device determines at least one user to be involved in the correspondence of the event according to the setting information.

According to the above disclosure, the user who is invited to the electronic conference can be limited to the user who can access the data held by the control device, or the accessible user can be included in the user to be invited to the electronic conference.

### ADVANTAGEOUS EFFECTS OF INVENTION

According to the present disclosure, it is possible to provide the environment in which the user to be involved in the correspondence of the event indicating the matter generated in relation to the controlled target participates in and holds the electronic conference for the correspondence of the event.

### BRIEF DESCRIPTION OF DRAWINGS

Fig. 1 is a schematic diagram illustrating an overall configuration example of a network system 1 according to an embodiment.
Fig. 2 is a schematic diagram illustrating a configuration example of a control device 100 of the embodiment.
Fig. 3 is a view illustrating a content example of event code information 152 of the embodiment.
Fig. 4 is a view illustrating a content example of device user management information 154 of the embodiment.
Fig. 5 is a view illustrating a content example of device relevant information 156 of the embodiment.
Fig. 6 is a schematic diagram illustrating a configuration example of a conference server 200 of the embodiment.
Fig. 7 is a view illustrating an example of correspondence history information 231 of the embodiment.
Fig. 8 is a schematic diagram illustrating a configuration example of a terminal device 300 of the embodiment.
Fig. 9 is a schematic diagram illustrating a configuration of a module included in the control device 100 of the embodiment.
Fig. 10 is a schematic diagram illustrating a configuration of a module included in the conference server 200 of the embodiment.
Fig. 11 is a schematic diagram illustrating an overall configuration of an electronic conference system of the embodiment.
Fig. 12 is a flowchart illustrating an example of processing for operating the electronic conference system of the embodiment.
Fig. 13 is a schematic diagram illustrating an example of a sequence of VPN connection of the embodiment.
Fig. 14 is a view schematically illustrating an example of a convocation notice 11 of the embodiment.
Fig. 15 is a schematic diagram illustrating a screen example for login of the embodiment.
Fig. 16 is a view illustrating a display example of a screen displayed during a conference of the embodiment.
Fig. 17 is a view illustrating a display example of a screen displayed during the conference of the embodiment.
Fig. 18 is a view illustrating a display example of a screen displayed during the conference of the embodiment.
Fig. 19 is a view illustrating a display example of a screen displayed during the conference of the embodiment.
Fig. 20 is a view illustrating a display screen example for causal determination of a matter of the embodiment.
Fig. 21 is a view illustrating a display screen example for the causal determination of the matter of the embodiment.

### DESCRIPTION OF EMBODIMENT

An embodiment of the present disclosure will be described in detail with reference to the drawings. The same or equivalent part in the drawings is denoted by the same reference numeral, and the description will not be repeated.

### <A. Application example>

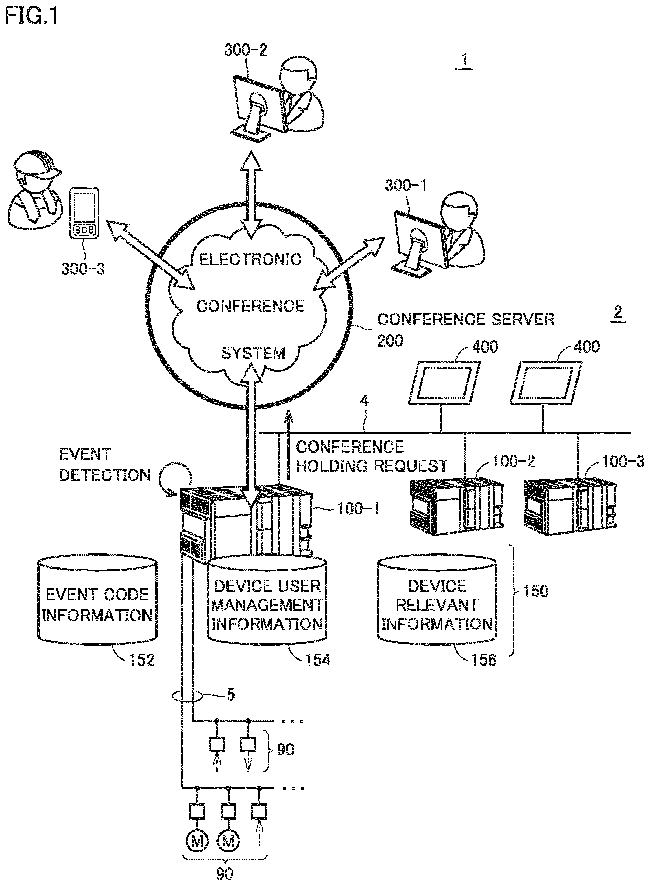

With reference to Fig. 1, an example of a scene to which the present invention is applied will be described.

Fig. 1 is a schematic diagram illustrating an overall configuration example of a network system 1 according to an embodiment. In the present disclosure, as a main use form of network system 1, a "remote maintenance system" that remotely maintains a target facility 2 is intended, but the technical scope of the present invention is not limited to the scope of this term, and should be reasonably interpreted based on the description of the claims.

Network system 1 shares various types of information in target facility 2 and provides a platform giving a command to target facility 2 as needed.

In the example of Fig. 1, target facility 2 includes one or a plurality of control devices 100-1, 100-2, 100-3, ... (hereinafter, also referred to as a "control device 100"). Control device 100 may be connected to a field network 4. EtherCAT (registered trademark), EtherNet/IP (registered trademark), or the like, which is an industrial network, can be used for field network 4.

For example, control device 100 corresponds to an industrial controller called a programmable logic controller (PLC), and controls various manufacturing facilities and machines (not illustrated). In the control by control device 100, information (state value) indicating a state of a field device is collected using a field device 90 including a sensor or the like through a field network 5, and a predetermined control arithmetic operation is executed using the collected information according to a program executed by control device 100, so that a control command is calculated and output to field device 90 such as an actuator. In control device 100, the control command is calculated by executing the control arithmetic operation such as a sequence program and a motion program.

Field device 90 is an example of a target controlled by control device 100 by communicating with control device 100 through field network 5. The data exchanged between control device 100 and field device 90 through network 5 is updated in a very short period of several 100 µsec order to several 10 msec order. The processing for updating such the exchanged data is also referred to as input and output refresh.

A support device 400 including one or a plurality of indicators is connected to field network 4. Although not illustrated, an operation server device such as a manufacturing execution system (MES) may be further connected to the device connected to network 4. Support device 400 is a device that provides a supervisory control and data acquisition (SCADA) function, or a device that supports preparation required for control device 100 to control a control target. Such the support function includes, but is not limited to, editing of a control program, simulation of a control program, or the like.

Typically, target facility 2 is closed in the factory and cannot be accessed from the outside.

In addition to target facility 2, network system 1 includes an electronic conference system on the Web capable of sharing various digital information (multimedia information) in real time. The electronic conference system is provided and operated by a conference server 200.

Conference server 200 receives data including at least one of an image and a voice from at least one of a terminal device 300, a support device 400, and control device 100 that are connected through the network, and distributes the data to a device different from a transmission source of the data. Thus, a dual-directional interactive (interactive) communication environment is provided between users of the respective devices. Data delivery can be implemented using any method. That is, a method in which conference server 200 multicasts or broadcasts all the devices connected to the network may be adopted, data received from the devices by conference server 200 may be permanently or temporarily held, or each device connected to the network may be accessibly held in a shareable manner. While the electronic conference system is enabled, it is preferable that conference server 200 holds data, and a part or all of the shared data is automatically deleted from the viewpoint of security when the electronic conference system is disabled (terminated).

The cloud-based conference system implemented by combining a web server and a web browser is exemplified as an example of the electronic conference system, but a network system having any form or name may be adopted as long as digital information can be shared among control device 100, one or a plurality of terminal devices 300-1, 300-2, 300-3, ... (hereinafter, also referred to as a "terminal device 300"), support device 400, and conference server 200. For example, a network system called a "video conference system" may be adopted, or when a new network system is put into practical use in the future, such the network system may be adopted. In addition, the electronic conference system may be provided on a private network accessible only by a specific user, or may be provided on a public network such as the Internet. In any case, a mechanism such as a secure communication protocol is applied to the public network at least during the electronic conference. In addition, access to the user is preferably restricted using a password or the like.

Furthermore, a plurality of network systems may be used in combination. For example, required processing may be executed in response to a message posted by any user, and interactive behavior can be implemented. Accordingly, for example, a system such as a chat system or a multimedia messaging service (MMS) can be used.

In network system 1, each of control device 100, terminal device 300, and support device 400 can participate in the electronic conference system like a so-called user. That is, conference server 200 accepts access from one of control device 100, terminal device 300, and support device 400, and from the viewpoint of the user of terminal device 300 participating in the electronic conference system, another device (control device 100, support device 400, or conference server 200) looks like one user like the user of another terminal device 300. Control device 100 can behave like a plurality of users using a virtualization technology.

Each user of terminal device 300 can also exchange electronic data with each device of control device 100, conference server 200, and support device 400 such that the electronic data can be exchanged (shared) with the users of other terminal devices 300. More specifically, control device 100 transmits various types of information to the electronic conference system, and receives information (operation command) and the like from any one of terminal devices 300 connected to the electronic conference system. As a typical implementation, conference server 200 collects information from each device (at least one of control device 100, terminal device 300, and support device 400) participating in the electronic conference system, and transmits or distributes the collected information in response to a request from these devices.

In addition, control device 100 holds setting information 150 performing appropriate setting for the electronic conference system. More specifically, as an example of setting information 150, control device 100 holds event code information 152 including an event code for each type of event, device user management information 154 managing an identifier such as an administrator or owner of control device 100, and device relevant information 156 such as information collected in real time in relation to the operation of control device 100, information managing control device 100, and information related to the operation of field device 90. Some or all of the contents of setting information 150 are typically determined in advance by the administrator or owner of control device 100 according to the situation.

Although Fig. 1 illustrates a configuration example in which control device 100 holds all of setting information 150, some or all of setting information 150 may be held by another device. For example, conference server 200 or any terminal device 300 may hold a part or all of setting information 150. Hereinafter, a mode in which control device 100 holds setting information 150 will be mainly described as a typical example.

Control device 100 determines whether a matter is generated based on the state information collected from field device 90. That is, control device 100 detects the generation of the matter based on the collected state information. In the detection of the generation of the matter, typically, a reference (such as a threshold) set in advance for each type of the state information is compared with a current value of the state information, and when the current value reaches the reference, it can be determined that the corresponding matter (for example, a failure or abnormality of the facility including field device 90, or the like) is generated. Alternatively, when a specific flag is generated from the state of the unique device disposed in each process, it may be determined that the failure or abnormality is generated based on the flag. The matter is not limited to the failure or abnormality of field device 90 as long as the matter is generated in association with field device 90, and for example, includes a shortage of a material (filler, paint, sealing material, and the like) used in a production process associated with field device 90, a defect (scratches, chips, and the like) of a workpiece manufactured in the production process, and the like. The matter generated in association with field device 90 may also include the matter that results from one or a plurality of factors.

When determining that the matter is generated, control device 100 acquires the event code of the event corresponding to the type of the matter indicated by the determination result from event code information 152 (that is, the event is detected), and transmits a holding request notice requesting the holding of the electronic conference. Control device 100 sets the event code in the holding request notice and sets device user management information 154.

In response to the holding request notice from control device 100, conference server 200 distributes a convocation notice to the conference to the user who is to correspond to the event, and sets a conference room for conversation in the virtual space. The conference room includes a virtual space that can be designated by a uniform resource locator (URL) on a cloud. Conference server 200 designates the user to correspond to the event using device user management information 154 set in the holding request notice. The user who receives the convocation notice operates terminal device 300 to interact with another user at the electronic conference, thereby analyzing the factor that may have cause the matter according to the matter of the event code notified from control device 100, and outputting the analysis result. The output of the analysis result may include a command of the operation command eliminating the matter with respect to control device 100. Control device 100 executes the command of the operation command from terminal device 300 and transfers the execution result to another device of the electronic conference, and terminal device 300 that receives the result outputs the result. The user of terminal device 300 monitors the result from control device 100. Thus, in network system 1, interactive maintenance activities can be performed between conference server 200, terminal device 300, and support device 400.

Hereinafter, a more detailed configuration and processing of network system 1 of the embodiment will be described as a more specific application example of the present invention.

### <B. Configuration of control device 100>

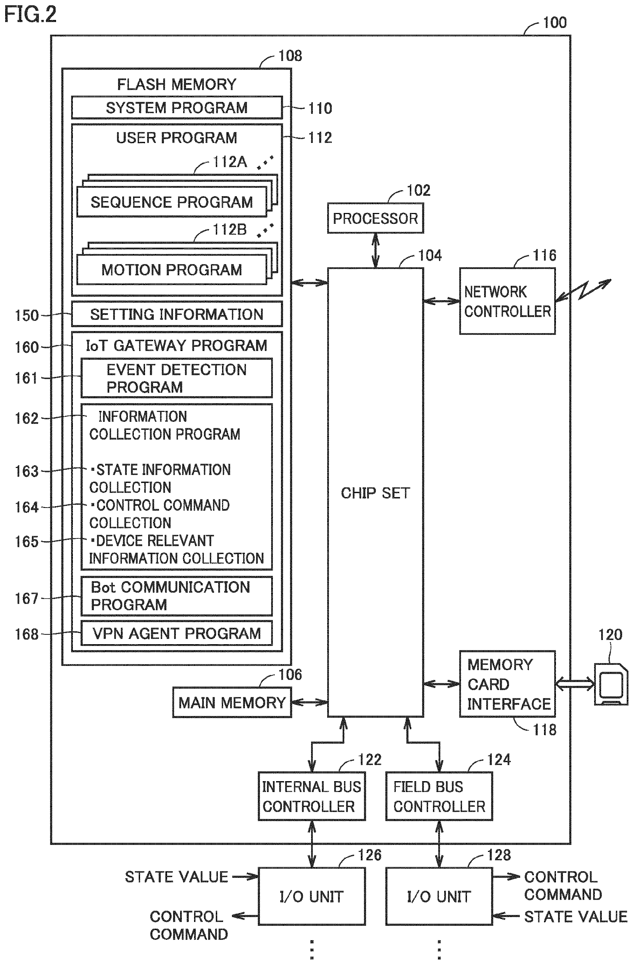

Fig. 2 is a schematic diagram illustrating a configuration example of control device 100 of the embodiment. With reference to Fig. 2, control device 100 is equivalent to a computer that implements the control of the control target by causing a processor to execute a previously installed program. More specifically, control device 100 includes a processor 102 such as a CPU (Central Processing Unit) or an MPU (Micro-Processing Unit), a chip set 104, a main memory 106, a flash memory 108, a network controller 116, a memory card interface 118, an internal bus controller 122, and a field bus controller 124.

Processor 102 reads a system program 110, a user program 112, and an IoT gateway program 160 that are stored in flash memory 108, deploys them in main memory 106, and executes them. When user program 112 is executed under system program 110, control for the control target is implemented. That is, processor 102 implements a controller that executes input and output refresh and control arithmetic operation by being linked with main memory 106 and flash memory 108.

System program 110 includes an instruction code providing such a basic function of control device 100 as data input and output processing and execution timing control. User program 112 is arbitrarily designed according to the control target, and includes a sequence program 112A executing sequence control, a motion program 112B executing motion control and input/output refresh program (not shown).

Chip set 104 implements processing of entire control device 100 by controlling each component. Internal bus controller 122 is an interface that exchanges the data between control device 100 and an I/O unit 126 connected to control device 100 through an internal bus. Field bus controller 124 is an interface that exchanges the data between control device 100 and an I/O unit 128 connected to control device 100 through a field bus (not illustrated). Internal bus controller 122 and field bus controller 124 acquire the status values input to corresponding I/O units 126 and 128, respectively, and output an arithmetic result of processor 102 as a command value from corresponding I/O units 126 and 128.

Memory card interface 118 is configured such that memory card 120 is detachable, can write the data in memory card 120, and can read the data from memory card 120.

Network controller 116 controls the data exchange through various wired and wireless networks. In network system 1 of the embodiment, the data is exchanged with another device of the electronic conference system through network controller 116. That is, network controller 116 corresponds to a communication unit that can be network-connected to conference server 200 and the at least one terminal device 300.

Flash memory 108 further holds setting information 150 and an IoT gateway program 160 that implement network system 1 of the embodiment. Setting information 150 includes event code information 152, device user management information 154, device relevant information 156, and the like as described with reference to Fig. 1.

IoT gateway program 160 is an embodiment of the electronic conference program causing control device 100 to participate in the electronic conference by being executed. When executed, IoT gateway program 160 implements the processing related to participation in the electronic conference and the processing performing the data exchange between control device 100 and another device of the electronic conference system. More specifically, IoT gateway program 160 includes an event detection program 161, an information collection program 162, a Bot communication program 167, and a virtual private network (VPN) agent program 168, and event detection program 161 is configured to detect the event indicating the matter generated in relation to field device 90 based on the state value output by field device 90 under control.

When executed, information collection program 162 performs an state information collection 163 and a control command collection 164 in which control device 100 collects the state value and the control command exchanged with field device 90 by the input and output refresh in real time, and collection 165 of device relevant information 156.

Some or all of the functions provided by executing the program using control device 100 may be implemented as a dedicated hardware circuit.

### (b1. Specific example of setting information 150)

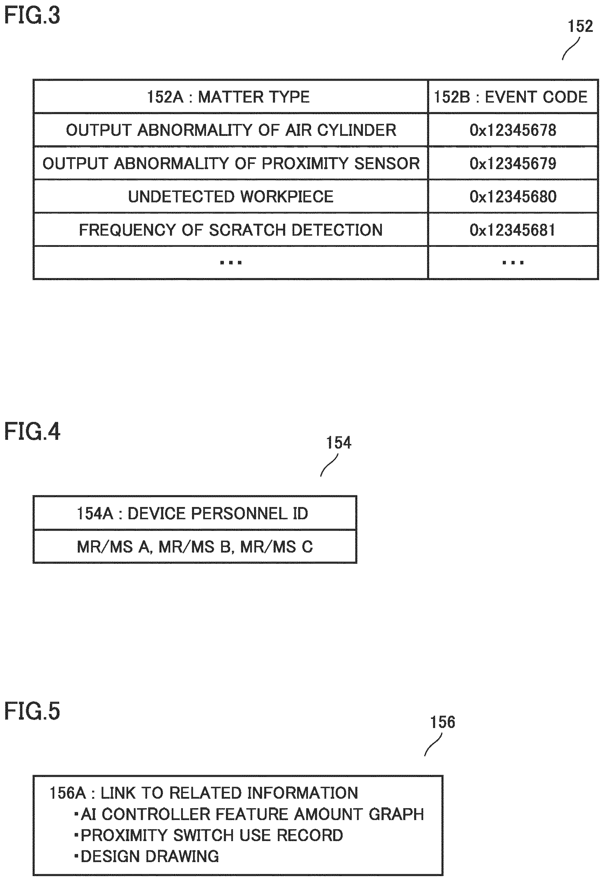

Figs. 3, 4, and 5 are views illustrating content examples of event code information 152, device user management information 154, and device relevant information 156 of the embodiment, respectively. Event code information 152 of Fig. 3 includes a matter type 152A and an event code 152B in association with each of the matters. Device user management information 154 of Fig. 4 includes device person ID 154A including an identifier of each user who manages control device 100. More specifically, device person ID 154A defines the identifier of a user who can access (is permitted to access) data of device relevant information 156 held by control device 100 or correspondence history information 231 held by conference server 200. The user designated by device person ID 154A includes a site worker, an administrator, and the like of a company that maintains a factory including a production line of control device 100.

Referring to Fig. 5, device relevant information 156 includes a link 156A that is reference information referring to an AI controller feature amount graph, a use record of a proximity switch, a design drawing, and the like. For example, link 156A includes a reference destination uniform resource locator (URL). The reference destination URL indicates a secure storage area in which corresponding information is stored. The AI controller feature amount graph represents a feature amount (statistic or the like) of a time-series state value to be referred to when control device 100 derives the control command using machine learning. For example, the use record of the proximity switch (sensor) includes a usage time. The design drawing represents the configuration of control device 100 or target facility 2. In the embodiment, entity of data itself may be set in device relevant information 156 instead of link 156A or together with link 156A.

### <C. Configuration of conference server 200 and terminal device 300>

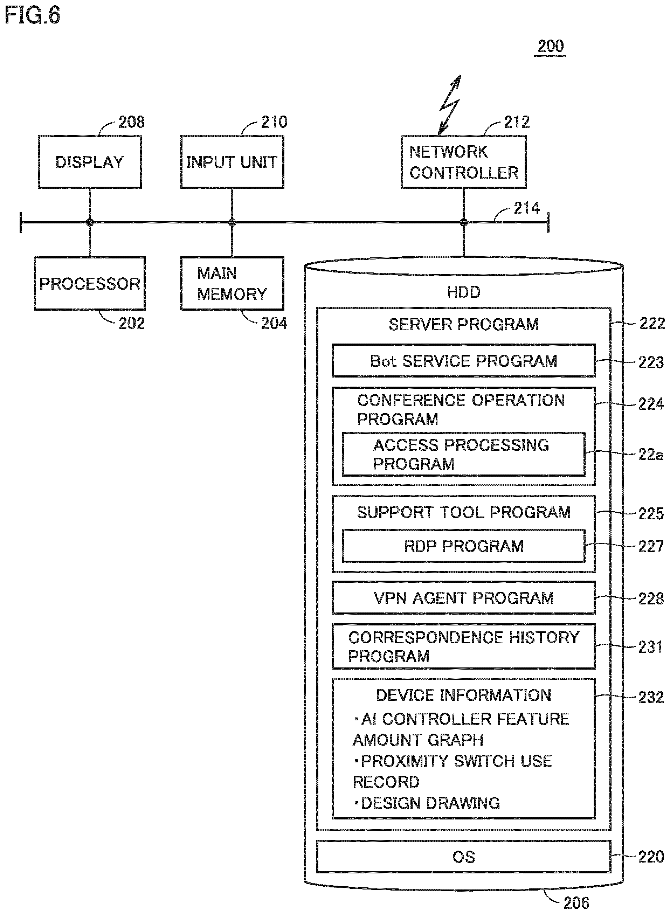

Fig. 6 is a schematic diagram illustrating a configuration example of conference server 200 of the embodiment. Referring to Fig. 6, conference server 200 is a computer having a general-purpose architecture. Conference server 200 implements various pieces of processing as described later by the processor executing a program installed in advance.

Conference server 200 includes a processor 202 such as a CPU and an MPU, a main memory 204, a hard disk (HDD) 206, a display 208 presenting information to the user, an input unit 210 such as a keyboard and a mouse, and a network controller 212 exchanging the data with other devices. These components are communicably connected to one another through an internal bus 214. Hard disk 206 includes an operating system (OS) 220 providing an execution environment of a basic program in conference server 200, and a server program 222 executed under the OS. These programs are read into main memory 204 and executed by processor 202.

Server program 222 includes a program and data (information). More specifically, server program 222 includes a Bot service program 223 implementing predetermined service related to the electronic conference, a conference operation program 224 providing the electronic conference system, a support tool program 225 allowing support device 400 to participate in the electronic conference, a VPN agent program 228, correspondence history information 231 indicating a record of correspondence to the event determined or performed by the electronic conference as the history, and device information 232. Device information 232 corresponds to setting information 150 received together with the holding request of the electronic conference from control device 100.

Conference operation program 224 includes an access processing program 22a implementing access processing in which control device 100, terminal device 300, support device 400, and conference server 200 in which conference server 200 participates in the electronic conference communicate with each other. Support tool program 225 includes an RDP program 227 that implements communication according to remote desktop as a tool joining or inviting support device 400 to the electronic conference. In the communication according to the remote desktop, conference server 200 transfers and displays the screen of support device 400 to terminal device 300 participating in the electronic conference through the network provided by the electronic conference system, and accepts the operation on support device 400 from terminal device 300 through the displayed screen. A virtual private network (VPN) agent program 228 is a program connecting conference server 200 to a VPN 700 through a VPN server 600.

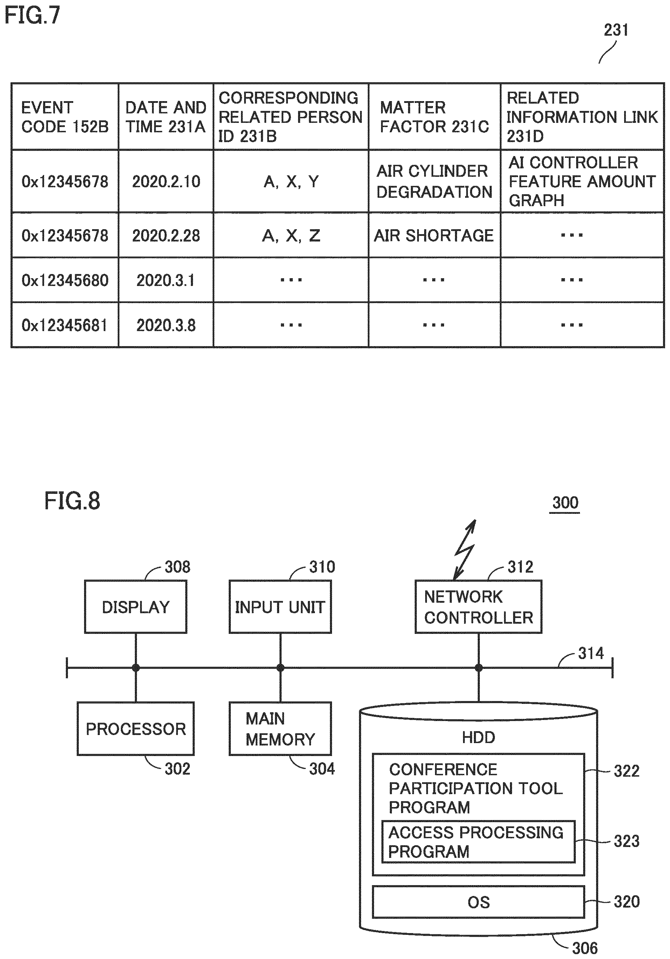

Fig. 7 is a view illustrating an example of correspondence history information 231 of the embodiment. Correspondence history information 231 indicates a corresponding result as the history for each type of event for which the response is determined or implemented by the electronic conference. More specifically, correspondence history information 231 includes, for each type of event, an event code 152B of the event, a date and time 231A such as a date and time when the response was determined or performed, a related person ID 231B identifying the user who has participated in the electronic conference (more specifically, involved in the correspondence to the event), at least one factor 231C of the matter determined for the event, and a link 231D indicating a reference such as a reference destination URL of data (related information) distributed to terminal device 300 determining factor 231C. Related person ID 231B includes the identifier of the user who participates in the electronic conference, namely, the related person of control device 100, the user of terminal device 300, or the like.

Fig. 8 is a schematic diagram illustrating a configuration example of terminal device 300 of the embodiment. Terminal device 300 is a computer having a general-purpose architecture. Terminal device 300 implements various pieces of processing by the processor executing a previously-installed program.

Terminal device 300 includes a processor 302 such as a CPU or an MPU, a main memory 304, a hard disk (HDD) 306, a display 308 presenting the information to the user, an input unit 310 such as a keyboard or a mouse, and a network controller 312 exchanging the data with another device. These components are communicably connected to one another through an internal bus 314. Hard disk 306 includes an OS 320 providing an execution environment of a basic program in terminal device 300, and a conference participation tool program 322 participating in and interacting with the electronic conference that is an example of the user program executed under the OS. Conference participation tool program 322 includes an access processing program 323 such as a browser application for terminal device 300 to communicate with other devices (control device 100, conference server 200, and support device 400) that participate in the electronic conference. These programs of HDD 306 are read into main memory 304 and executed by processor 302.

Furthermore, terminal device 300 may be a general-purpose personal computer or a portable device (a smartphone, a tablet, or the like).

Some or all of the functions provided by conference server 200 and terminal device 300 executing the programs may be implemented as dedicated hardware circuits.

### <D. Module configuration>

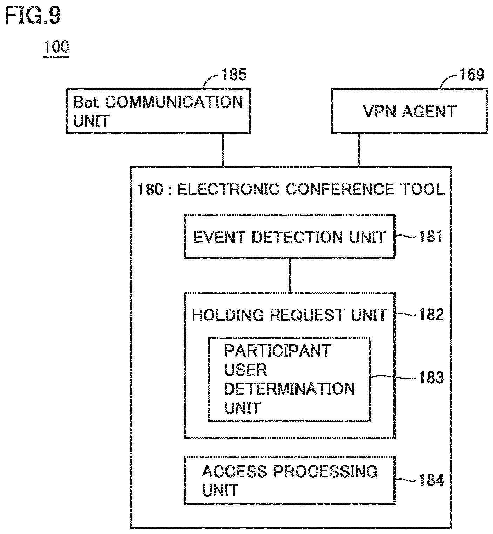

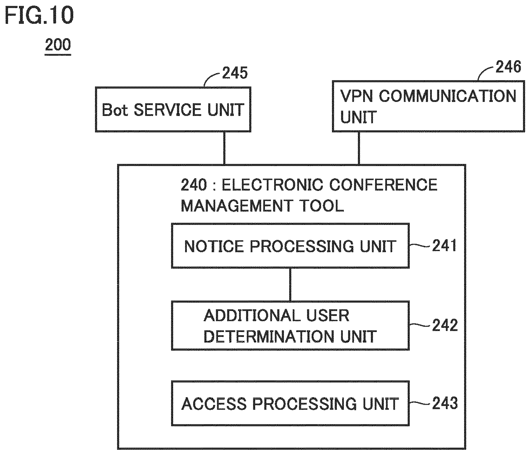

Fig. 9 is a schematic diagram illustrating a configuration of a module included in control device 100 of the embodiment. In control device 100, a program or the like installed in flash memory 108 (Fig. 2) is expanded and executed by processor 102, so that a configuration on software in Fig. 9 is implemented. Fig. 10 is a schematic diagram illustrating a configuration of a module included in conference server 200 of the embodiment. In conference server 200, a program or the like installed in HDD 206 (Fig. 6) is expanded and executed by processor 202, so that a configuration on software in Fig. 10 is implemented.

Referring to Fig. 9, control device 100 includes a Bot communication unit 185 implemented by executing Bot communication program 167, an VPN agent 169 implemented by executing a VPN agent program 168, and an electronic conference tool 180 mainly implemented by executing IoT gateway program 160. Electronic conference tool 180 includes an event detecting unit 181 implemented by executing event detection program 161, a holding request unit 182 producing the notice of the conference holding request, and an access processing unit 184 performing access processing. Holding request unit 182 includes a participant user determination unit 183 that determines the user to correspond to the matter of the event detected by event detection unit 181. In the embodiment, participant user determination unit 183 determines the ID indicated by device user management information 154 as the ID of at least one user to be involved in the correspondence of the event. Furthermore, participant user determination unit 183 may selectively determine the user ID from device user management information 154 according to the event code (the type of the matter).

Referring to Fig. 10, conference server 200 includes a Bot service unit 245 implemented by executing Bot service program 223, a VPN communication unit 246 implemented by executing VPN agent program 228, and an electronic conference management tool 240 implemented by executing conference operation program 224. Electronic conference management tool 240 includes a notice processing unit 241 that processes the holding request notice of the electronic conference from control device 100 to produce a convocation notice, an additional user determination unit 242 that additionally decides the user to participate in the electronic conference, and an access processing unit 243 that performs the access processing.

Although each of the components in Figs. 9 and 10 is implemented by executing the program, but some or all of these components may be configured to include a hardware circuit such as an application specific integrated circuit (ASIC) or a field-programmable gate array (FPGA).

### <E. Overall configuration of electronic conference system, addition of participating users, and RDP tool>

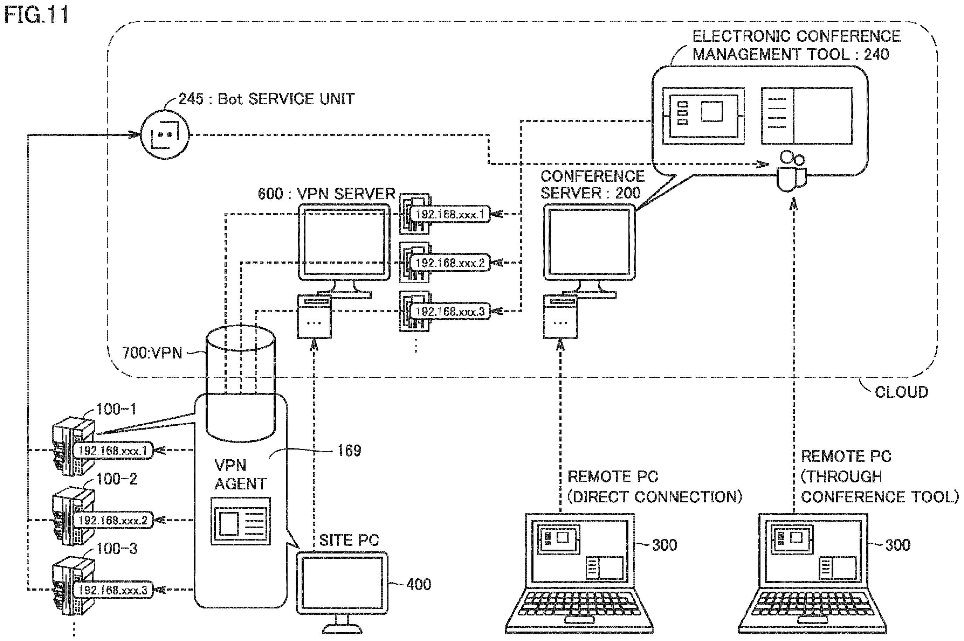

Fig. 11 is a schematic diagram illustrating an overall configuration of the electronic conference system of the embodiment. In the embodiment, conference server 200 provides the cloud-based electronic conference system by electronic conference management tool 240. In the electronic conference system, conference server 200 and VPN server 600 are provided on the cloud environment side. The device of the user participating in the electronic conference operated by conference server 200 includes one or the plurality of terminal devices 300, one or the plurality of control devices 100, and support device 400. Terminal device 300 may include a PC (abbreviation of a personal computer) in a production field in which control device 100 is provided and a PC remote from the production field. The PC may include terminal device 300 and support device 400.

Secured communication, for example, VPN communication is applied for the communication between terminal device 300 participating in the electronic conference and control device 100, support device 400, and the like in the field. More specifically, VPN server 600 and a VPN agent 169 operate so as to establish, maintain, and block tunneling of VPN connection between the field-side devices (control device 100 and support device 400) and terminal device 300 or conference server 200 in the electronic conference. In the embodiment, VPN agent 169 is implemented by a dedicated communication port of control device 100 and VPN agent program 168, but a VPN router independent of control device 100 can be provided instead of VPN agent 169 or in cooperation with VPN agent 169. Similarly to control device 100, support device 400 also includes the VPN agent.

In the electronic conference, the VPN communication is performed, so that the security can be secured with respect to the data exchanged with the outside by the field-side device, and the field-side device can be protected from an external threat.

In addition, in the electronic conference, the communication between Bot service unit 245 of conference server 200 and Bot communication unit 185 of control device 100 exists as communication not through the VPN. More specifically, Bot service unit 245 and Bot communication unit 185 cooperate with the devices constituting the electronic conference, for example, control device 100, conference server 200, and terminal device 300, and exchange the data between these devices as a proxy of these devices. More specifically, Bot service unit 245 receives the holding request notice of the electronic conference from Bot communication unit 185 of control device 100. In response to the reception of the notice of the holding request, Bot service unit 245 produces the notice of the conference convocation by adding and setting the URL of the conference room to the notice of the holding request on behalf of control device 100, and distributes the produced convocation notice of the conference to the destination.

### (e1. Addition of participant user)

In the embodiment, when the convocation notice for the conference is produced, the notice is processed such that the user to be involved in the correspondence of the event is added. More specifically, when detecting that Bot service unit 245 receives the notice of the holding request, conference server 200 activates notice processing unit 241 and additional user determination unit 242. Activated additional user determination unit 242 searches correspondence history information 231 based on the event code included in a holding request notice 10. As a result of the search, related person ID 23 1B associated with event code 152B matched with the event code is detected. Notice processing unit 241 outputs related person ID 231B detected by additional user determination unit 242 to Bot service unit 245 as an identifier of an additional user to be involved in the correspondence of the event. Bot service unit 245 additionally sets related person ID 23 1B of the additional user output by notice processing unit 241 as a convocation notice destination. As a result, the convocation notice of the conference can be distributed to the user who is involved in the correspondence of the same event in the past and has experience and the user can participate in the conference.

In the embodiment, a manufacturer, a vendor, or the like of control device 100 or field device 90 can also be invited as the user to be involved in correspondence of the event. Additional user determination unit 242 can determine a person in charge of a manufacturer or a vendor as an additional user. More specifically, when it is determined that link 231D of the related information associated with event code 152B matched with the event code of holding request notice 10 indicates the reference destination URL of the predetermined type of information, namely, when it is determined that the link indicates the URL of the type of information accessible (allowed to be accessed) by the manufacturer or the vendor, additional user determination unit 242 determines the person in charge of the manufacturer or the vendor as the additional user. In that case, notice processing unit 241 outputs the ID of the person in charge of the manufacturer or the vendor determined by additional user determination unit 242 to Bot service unit 245 as the identifier of the additional user to be involved in the correspondence of the event. As described above, in the embodiment, the users to be invited to the conference are selectively switched and determined according to the type of information that can be shared among the users in the electronic conference, for example, a degree of confidentiality of the information.

When receiving the notice of conference convocation through the communication terminal, each participant operates terminal device 300 to log in (enters) the conference room, and leaves the conference room by logout operation after the conference ends.

Furthermore, Bot service unit 245 can receive voice data based on an utterance of the user in the electronic conference from terminal device 300, convert the received voice data into the corresponding operation command, and transmit the converted command to control device 100. For example, search of the database in which a plurality of sets of voice data and commands are registered can be used for such the conversion. Control device 100 executes the command received from Bot service unit 245 and transfers an execution result. The command and the execution result are typically transferred through the VPN communication.

### (e2. RDP tool)

Conference server 200 provides an RDP tool by executing RDP program 227 in the electronic conference. With the RDP tool, terminal device 300 can display the screen information transferred from support device 400 of the field on display 308, and can transfer the operation information by the user such as the keyboard or the mouse of input unit 310 to support device 400. Support device 400 transfers the screen information corresponding to the operation information from terminal device 300. That is, support device 400 operates according to the operation information from terminal device 300 (for example, various programs are executed based on the command according to the operation information), and transfers the screen information indicating the operation result to terminal device 300. As described above, the RDP tool provides the environment in which field support device 400 can be remotely operated to terminal device 300.

More specifically, the screen information transferred from support device 400 to terminal device 300 by the RDP tool includes the information about the screen on which support device 400 monitors the operational condition of control device 100. For example, the screen information includes a monitor screen monitoring the state value or the control command of field device 90 collected by support device 400 in real time, a program edit screen on which support device 400 displays the control program of control device 100 and receive an editing operation, and a simulation screen displaying a result of simulation executed by support device 400. For example, the information about the monitor screen includes information about a screen indicating the operation state of field device 90 that operates according to the control command calculated by the control calculation of control device 100, a control command and an operation state corresponding to the control command, or the like.

In the simulation, support device 400 executes the program estimating a behavior of field device 90 controlled by control device 100, namely, the simulation program including a plurality of instructions included in the control program corresponding to field device 90. Support device 400 generates drawing data drawing the behavior of field device 90 estimated by the simulation execution in a three-dimensional virtual space, and generates screen information capable of presenting display of the plurality of commands of the control program of field device 90 and drawing representing the behavior of field device 90 according to the drawing data in the same screen. The types of the screen information are not limited thereto.

The operation information transferred from terminal device 300 to support device 400 includes information such as a monitoring operation monitoring the state information or the control command of field device 90 of a monitoring target, an editing operation editing the control program, and a simulation operation starting/ending/pausing the simulation. The types of the operation information are not limited thereto.

### <F. Flowcharts

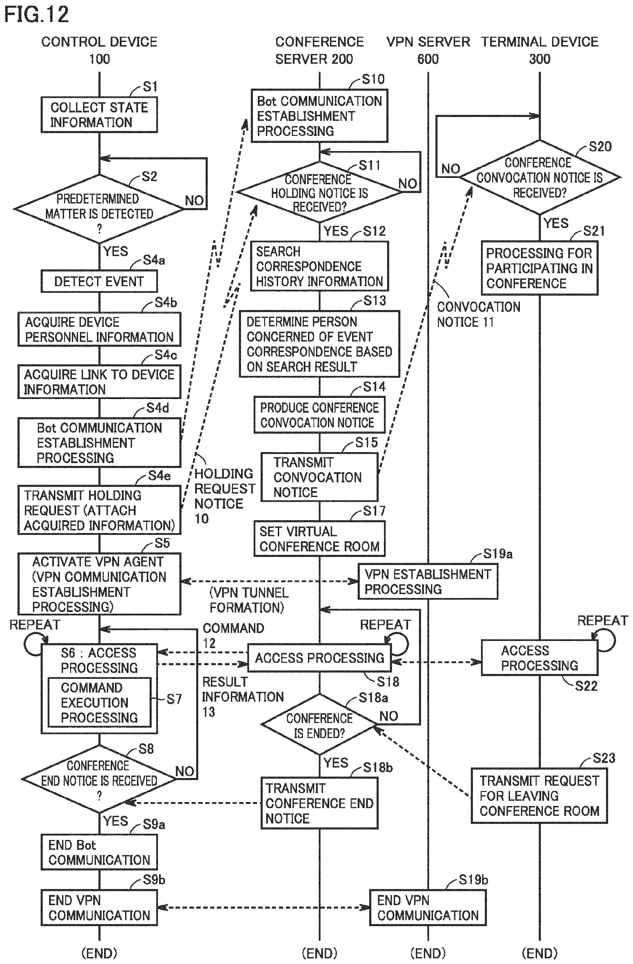

A typical operation example of the electronic conference system of the embodiment will be described. Fig. 12 is a flowchart illustrating an example of processing for operating the electronic conference system of the embodiment. Control device 100 collects the information by state information collection 163 and control command collection 164 during operation (step S1). Control device 100 causes event detection unit 181 to detect the event indicating the matter generated in association with field device 90 from the information indicating the collected operation state such as the state value or the control command (step S2, step S4a). More specifically, control device 100 analyzes the collected operation state information, and determines whether the predetermined matter is generated based on the analysis result (step S2). When determining that the predetermined matter is not generated (NO in step S2), control device 100 repeats the processing of step S2. When determining that the predetermined matter is generated (YES in step S2), control device 100 searches event code information 152 based on the type of the predetermined matter (step S4a). As a result of the search, control device 100 acquires at least one event code 152B associated with at least one matter type 152A matched with the type of the predetermined event from event code information 152.

Control device 100 acquires device person ID 154A from device user management information 154 (step S4b), and acquires link 156A to the device information from device relevant information 156 (step S4c).

When the predetermined matter is generated (that is, the event is detected), control device 100 transmits holding request notice 10 requesting the holding of the electronic conference to conference server 200 (step S4d, step S4e). More specifically, control device 100 transmits the connection request for Bot communication to conference server 200 by Bot communication unit 185, and Bot service unit 245 establishes the Bot communication between control device 100 and conference server 200 in response to the connection request from control device 100 (step S4d, step S10). Control device 100 produces holding request notice 10 using the information acquired in steps S4a to S4c, and transmits produced holding request notice 10 to conference server 200 through the Bot communication (step S4e).

Control device 100 produces holding request notice 10 in which matter type 152A and event code 152B acquired in step S4a, device person ID 154A acquired in step S4b, and link 156A to the device information acquired in step S4c are set.

Control device 100 activates VPN agent 169 and causes VPN agent 169 to establish VPN communication (step S5). More specifically, VPN agent 169 transmits a VPN connection request (outgoing call) to VPN server 600, and when receiving the outgoing call, VPN server 600 establishes the VPN communication by the tunneling between control device 100 and conference server 200 so as to be able to communicate with VPN agent 169 (step S5, step S19a). Thereafter, the VPN communication is maintained until the VPN communication is interrupted (terminated).

Control device 100 performs the access processing (step S6). The access processing includes command execution processing (step S7). In the command execution processing, control device 100 receives a command 12 of the operation command received from the device participating in the conference, executes received command 12, and transmits result information 13 indicating the result of the execution to the device of the transmission source of command 12. Control device 100 determines whether the notice of conference end is received from conference server 200 (step S8), and when it is determined that no conference end notice is received (NO in step S8), the access processing of step S6 is repeated. On the other hand, when determining that the conference end notice is received (YES in step S8), control device 100 disconnects Bot communication and VPN communication maintained during the conference. These communication interruptions are performed using Bot communication unit 185 and VPN agent 169 (step S9a, step S9b, step S19b).

Conference server 200 performs Bot communication establishment processing (step S10), and determines whether to receive holding request notice 10 from control device 100 through Bot service unit 245 (step S11). When it is determined that holding request notice 10 is not received (NO in step S11), step S11 is repeated, but when it is determined that holding request notice 10 is received (YES in step S11), conference server 200 controls notice processing unit 241 to produce and transmit a convocation notice 11 based on received holding request notice 10 (steps S12 to S15).

More specifically, conference server 200 searches correspondence history information 231 based on event code 152B set in received holding request notice 10, and acquires related person ID 231B associated with event code 152B from the search result (step S12, step S13). Thus, conference server 200 can additionally determine the user involved in the correspondence of the past event, which is the past event indicated by the event code 152B set in holding request notice 10, as the user to be involved in the correspondence of the event detected in step S4a. Notice processing unit 241 produces convocation notice 11 in which device person ID 154A set in holding request notice 10 and related person ID 231B of the additional user determined in step S13 are set as destinations (step S14). Conference server 200 sets event code 152B included in received holding request notice 10 and link 156A to the device information as convocation notice 11. Conference server 200 can also set factor 231C or link 231D associated with event code 152B in convocation notice 11 from the search result of correspondence history information 231 in step S12. When link 231D indicates more information, link 231D is set in convocation notice 11 instead of link 156A. In the embodiment, it is assumed that link 231D is set in convocation notice 11. Conference server 200 transmits produced convocation notice 11 to the destination (step S15). Thus, the user set as the destination of convocation notice 11 receives convocation notice 11 and is urged to participate in the conference. The method for communicating convocation notice 11 may include multicast communication to all the users set as the destination of convocation notice 11 or unicast communication for each user. Here, in order to simplify the description, the user receives convocation notice 11 using terminal device 300.

Conference server 200 controls electronic conference management tool 240 so as to set a virtual conference room (step S17). In step S17, the virtual conference room is set after the communication of convocation notice 11, but the virtual conference room may be set, for example, in time for the reserved conference holding.

Conference server 200 performs the access processing by access processing unit 243 during the conference (step S18). In this access processing, command 12 from terminal device 300 of the conference participant is transmitted to control device 100, and result information 13 is received from control device 100 and transmitted to terminal device 300. Command 12 and result information 13 are transferred by the VPN communication.

Conference server 200 maintains at least the conference room during a period from when at least one user enters the virtual conference room until all the users leave the room. Conference server 200 determines whether the reception of request for leaving from the conference room from all users is detected by electronic conference management tool 240, namely, whether to end the conference (step S18a). When it is not determined that the conference ends (NO in step S18a), the processing in step S18 is repeated, but when it is determined that the conference ends (YES in step S18a), conference server 200 notifies control device 100 of the conference end (step S18b).

In terminal device 300, processor 302 determines whether convocation notice 11 is received (step S20). When convocation notice 11 is not received (NO in step S20), step S20 is repeated, but when it is determined that convocation notice 11 is received (YES in step S20), processor 302 performs the processing for participating in the conference (step S21). More specifically, when processor 302 receives the user operation (login operation) from input unit 310, conference server 200 causes the user of terminal device 300 to participate in the conference in response to a login request from terminal device 300. Thus, during the conference, terminal device 300 performs the access processing for communicating with other devices (conference server 200, another terminal device 300, support device 400, and control device 100) (step S22).

When terminal device 300 receives the user operation (logout operation) from input unit 310, terminal device 300 transmits a request for leaving the conference room to conference server 200 in the logout processing (step S23).

### <G. Sequence of VPN connection>

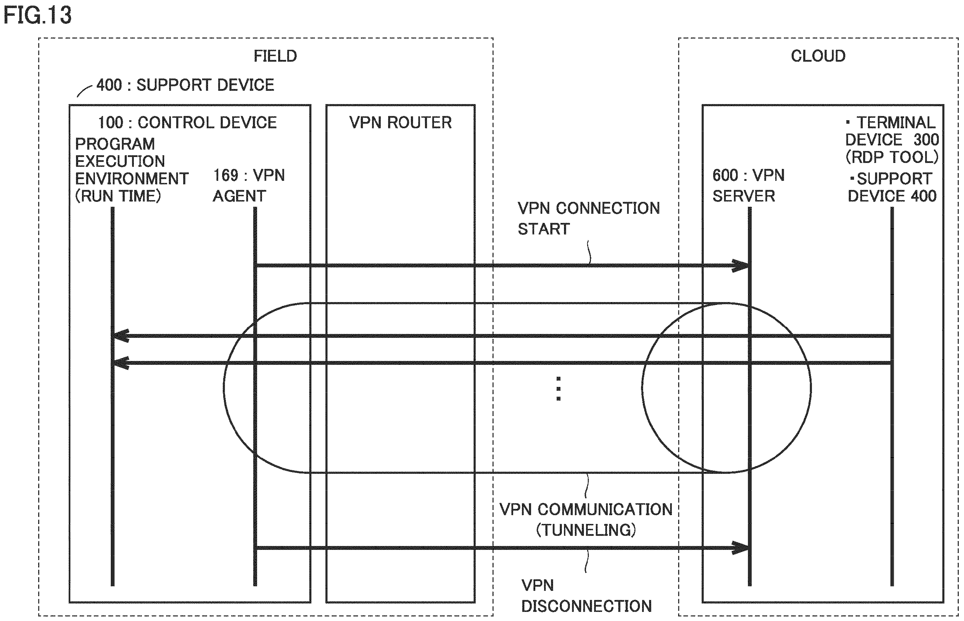

Fig. 13 is a schematic diagram illustrating an example of a sequence of VPN connection of the embodiment. For example, Fig. 13 can be applied to a sequence of connection and disconnection of VPN communication in step S5, step S19a, and step S19b in Fig. 12.

In the embodiment, the VPN connection is started in response to the outgoing call of control device 100 on the field side, and the VPN communication is established between control device 100 and VPN server 600 on the cloud. The VPN communication is established through a router device (such as a VPN router) provided on the field side.

In the access processing during the conference, command 12 transmitted from terminal device 300 is received by VPN agent 169 of control device 100 through the tunneling of the VPN communication, received command 12 is executed in a program execution environment (also referred to as runtime) of control device 100, and result information 13 is transmitted by VPN agent 169 to terminal device 300 through the tunneling of VPN communication and VPN server 600. In addition, in the case where terminal device 300 and support device 400 on the field side communicate with each other using the RDP tool in the access processing during the conference, the communication is also performed through the tunneling of the VPN communication. For example, in the VPN communication, data to be transparently transferred through the tunnel is limited only to data to be exchanged between specific communication ports.

When receiving the conference end notice, namely, when the access processing becomes unnecessary, control device 100 disconnects the VPN communication through VPN agent 169 (step S9b in Fig. 12). As a result, the access from the external cloud side to the field side can be blocked.

In the present embodiment, only during a conference, more specifically, only when a user of a field device (the control device 100 or the support device 400) participates in the conference, the field device and the cloud-side device (the terminal device 300 and the conference server 200) exchange data with each other by VPN communication. Further, the VPN communication is started (communication is established) in response to the outgoing call from control device 100, and control device 100 disconnects at the end of the conference. By adopting such a configuration, even when the field device (control device 100, support device 400, and field device 90) in a factory communicates with a device outside the factory, an external security attack on the field device can prevented. Control device 100 may be configured to block the VPN communication and the Bot communication when detecting a security risk threat even during the conference.

### <H. Illustration of convocation notice to conference>

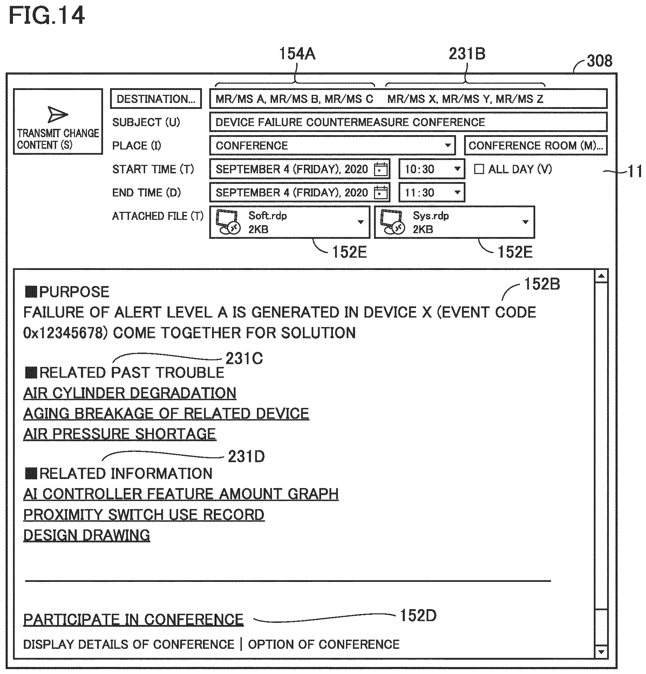

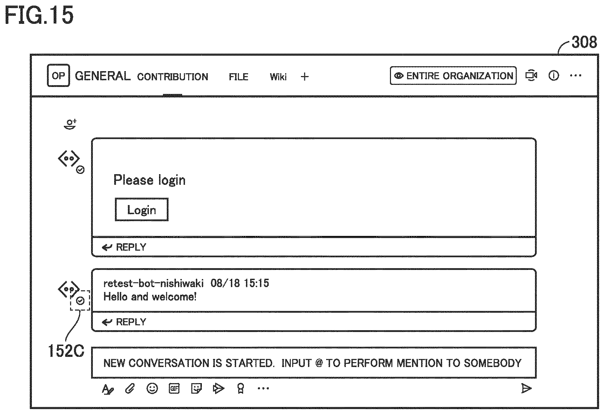

In the embodiment, for example, convocation notice 11 to the conference takes the form of an electronic mail as illustrated in Fig. 14, but the form of the notice is not limited to the electronic mail. Fig. 14 is a view schematically illustrating an example of convocation notice 11 of the embodiment. Fig. 15 is a schematic diagram illustrating a screen example for the login of the embodiment.

Fig. 14 illustrates convocation notice 11 displayed on display 308 of terminal device 300. Conference server 200 sets the identifiers (device person ID 154A and related person ID 231B) of the users to be involved in the correspondence of the event as the destinations in convocation notice 11, and attaches an RDP setting file 152E. RDP setting file 152E is a file in which connection destination information for remote desktop connection is described. When a click operation or the like is performed on RDP setting file 152E through input unit 310, terminal device 300 starts the communication with support device 400 according to the RDP based on a description content of RDP setting file 152E. Conference server 200 sets the purpose of the conference including event code 152B, for example, factor 231C and link 231D of related information for the past matter related to event code 152B in a mail text of convocation notice 11. In addition, conference server 200 sets a button 152D that is operated in order to enter the conference room (conference participation) in convocation notice 11.

In the embodiment, by attaching RDP setting file 152E to convocation notice 11, conference server 200 can also treat support device 400 as the user who should be involved in the correspondence of the event. The user of terminal device 300 can perform RDP communication with support device 400 during the conference by operating RDP setting file 152E in Fig. 14.

Furthermore, when the user of terminal device 300 operates button 152D in Fig. 14, the screen for login in Fig. 15 is displayed on display 308. On the screen in Fig. 15, a mark 152C is displayed (for example, red display) in a predetermined manner to notify the user of the generation of the event. The display mode may be changed for each type of event.

### <I. Illustration of display screen for causal determination of matter>

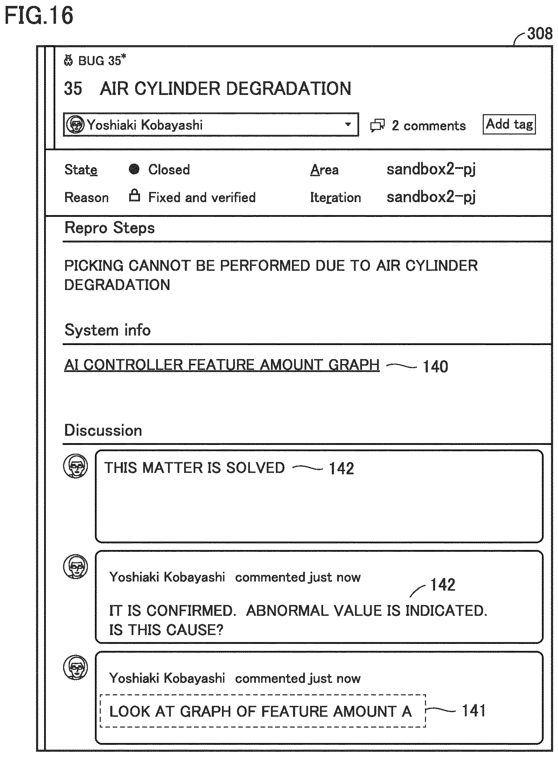

Figs. 16, 17, 18, and 19 are views illustrating display examples of screens displayed during conferences of the embodiment. In the conference, in order to determine the factor of the matter generated in relation to field device 90 of control device 100, the factor of the matter corresponding to event code 152B indicated by convocation notice 11 is determined from the factor candidate of at least one matter. On display 308, at least one previously-determined factor 231C (Fig. 14) indicated in convocation notice 11 is displayed as at least one factor candidate.

The user operates input unit 310 to designate "air cylinder degradation" as the first candidate among the factors 231C as the candidates of convocation notice 11. Electronic conference management tool 240 of conference server 200 specifies the type of related information used for factor identification of "air cylinder degradation" in the past based on link 231D of related information related to the matter "air cylinder degradation" of the first candidate. Here, for example, an "AI controller feature amount graph" is specified.

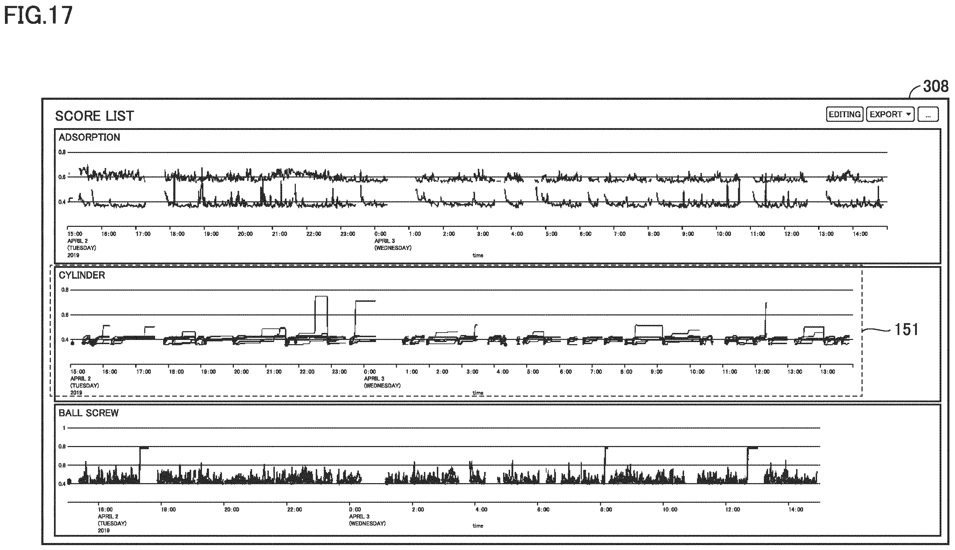

Conference server 200 acquires the specified an "AI controller feature amount graph 140" based on link 231D set in convocation notice 11. In the case where link 231D indicates a predetermined region of flash memory 108 in control device 100, conference server 200 (or terminal device 300) transfers command 12 of the operation command using link 231D to control device 100. Typically, in control device 100, electronic conference tool 180 receives command 12 and acquires information about "AI controller feature amount graph 140" from the predetermined region of flash memory 108 as execution result information 13, and transfers the acquired information to conference server 200 (or terminal device 300). Based on result information 13 received from control device 100, for example, "AI controller feature amount graph 140" is displayed on display 308 of terminal device 300 as illustrated in a screen 151 of Fig. 17. The user of terminal device 300 transmits a message 141 to another user to notify that the user wants to share screen 151.

The user who shares screen 151 analyzes "AI controller feature amount graph 140" on screen 151, and determines whether the factor of the matter of event code 152B corresponds to the first candidate "air cylinder degradation". More specifically, when the value of "AI controller feature amount graph 140" received from control device 100 indicates an abnormal value, the user can determine the factor of the matter of event code 152B as the "air cylinder degradation" of the first candidate. In this case, message 142 indicating that the factor determination of the matter is successful is shared among the users.

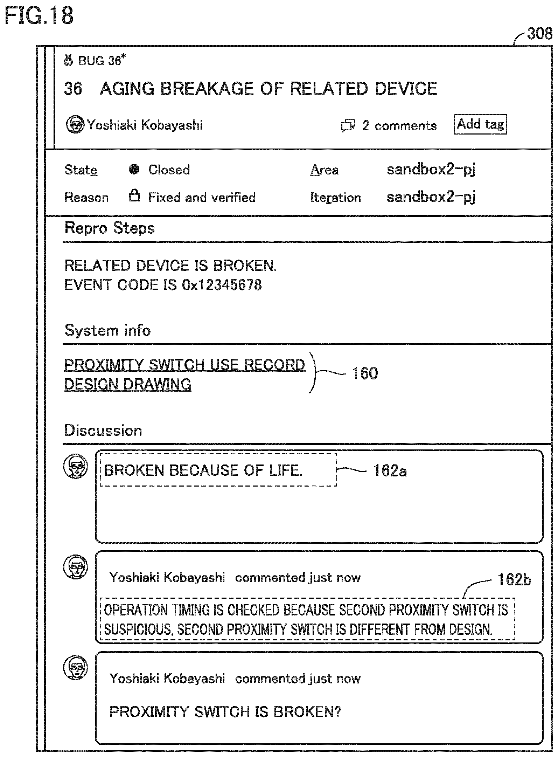

When it is determined that the factor of the matter of notified event code 152B does not correspond to the "air cylinder degradation" as the first candidate, the factor of the second candidate is designated. More specifically, the user of terminal device 300 designates "aging of related device" of the second candidate among candidate factors 231C as illustrated in Fig. 18. Electronic conference management tool 240 of conference server 200 acquires "use record of proximity switch" and "design drawing" 160 from control device 100 based on link 231D of the related information associated with the "aging of related device" of the designated second candidate, and displays the acquired information on display 308 of each terminal device 300 of the user.

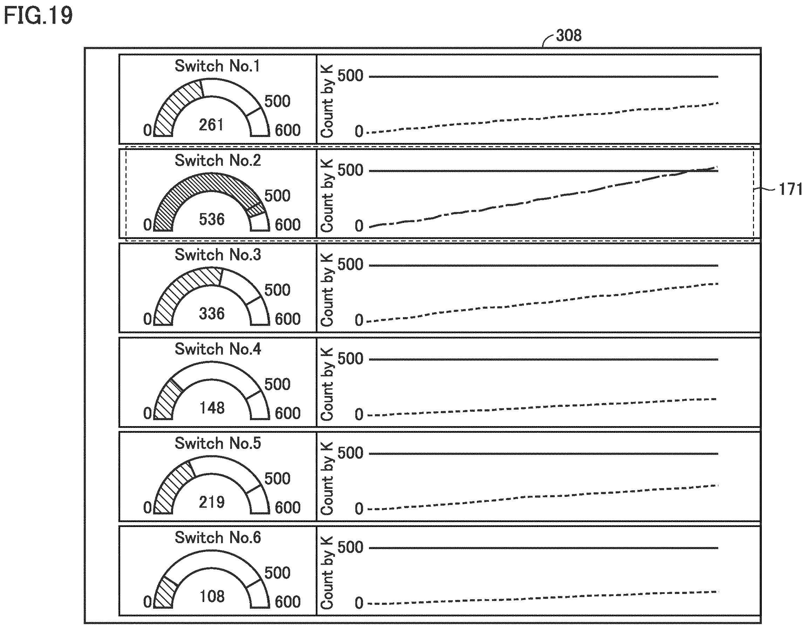

For example, Fig. 19 illustrates a screen 171 representing a graph of the "use record of proximity switch". The user who shares screen 171 compares the design information about the proximity switch illustrated in the design drawing with the "use record of proximity switch" on screen 171 to determine how far the "use record of proximity switch" deviates from the original design range. In the case where the degree of deviation is large, the user can determine that the factor of the matter of noticed event code 152B is the "aging of related device" as the second candidate. In this case, the user of terminal device 300 shares a message 162a and a message 162b indicating that the cause determination of the matter of event code 152B succeeds among the users.

The information about the "AI controller feature amount graph" or the "use record of proximity switch" described above may be acquired by the user of terminal device 300 operating an icon of RDP setting file 152E to activate the RDP tool. More specifically, the user of terminal device 300 transfers the operation information of the monitor of the "AI controller feature amount graph" or the "use record of proximity switch" to support device 400, and acquires screen information about screen 151 or screen 171, which is screen information corresponding to the operation information, from support device 400.

### <J. Other examples of display screen for causal determination of matter>

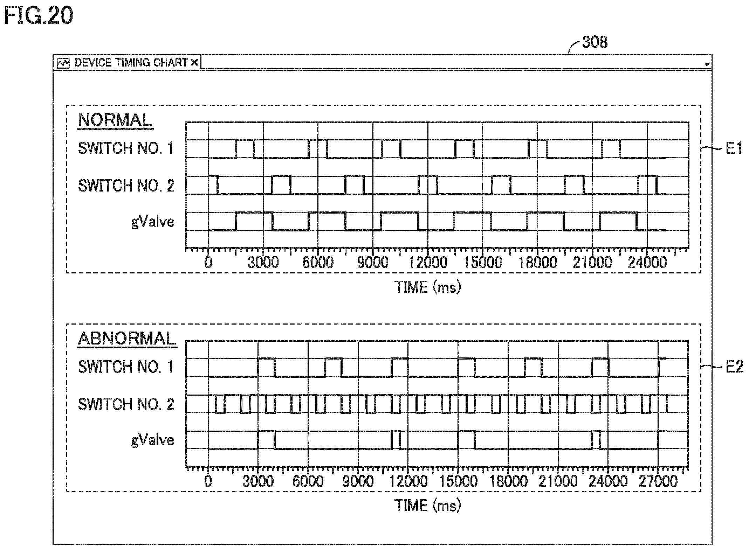

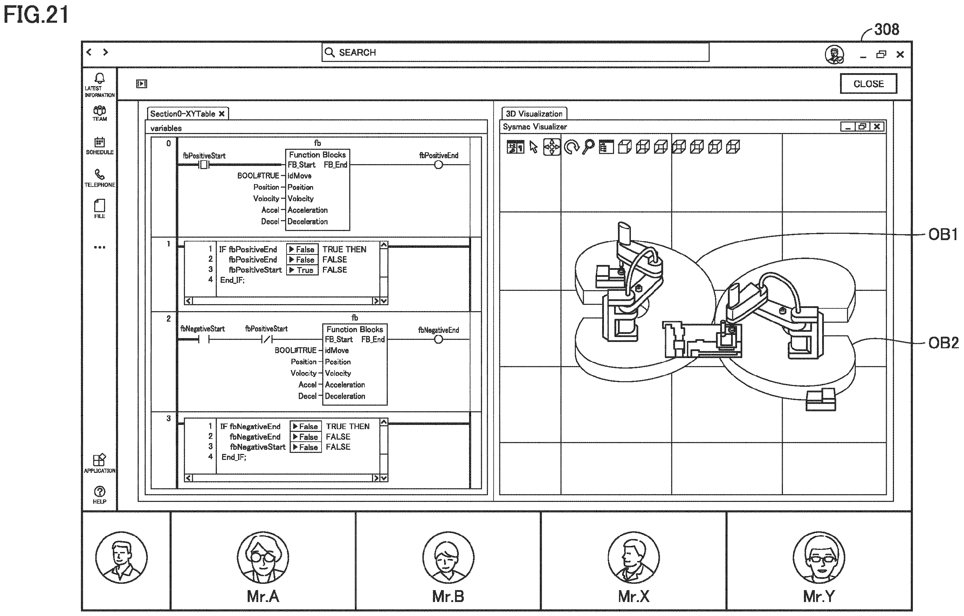

Figs. 20 and 21 are views illustrating display screen examples for the factor determination of the matter of the present embodiment. The user operates the icon of RDP setting file 152E of convocation notice 11 to activate the RDP tool. Using the RDP tool, terminal device 300 transfers the operation information about the monitor operation to support device 400, and receives the screen information about the monitor screen of a timing chart of the input and output signal of, for example, the proximity switch from support device 400. Terminal device 300 displays the screen information received from support device 400 in an area E2 of display 308. In addition, terminal device 300 receives the information about the timing chart of the input and output signal of the proximity switch indicated by the "design drawing" from control device 100 using link 231D of the device relevant information about convocation notice 11, and displays the timing chart in an area E1 of display 308. Display 308 in Fig. 20 displays both timing charts in parallel in area E1 and area E2 on the same screen. The user of terminal device 300 can determine how much the operation state of the proximity switch currently operating in the field deviates from the initial operation state of the design by comparing both the timing charts on the screen in Fig. 20. In the case where the degree of deviation is large, for example, the user can determine that the cause of the matter is the end of life of the proximity switch.

In the embodiment, the user of terminal device 300 can also determine the factor of the matter corresponding to event code 152B of convocation notice 11 from the simulation result of the control program of field device 90. More specifically, the user of terminal device 300 transmits the operation information causing support device 400 to execute the simulation using the RDP tool, receives the screen information indicating the simulation result from support device 400, and displays the received screen information on display 308.

Fig. 21 illustrates a screen example based on the screen information about the simulation result. A code string of the control program of a simulation target is illustrated on the left side of display 308 in Fig. 21, and the image based on the drawing data drawing the behavior of field device 90 estimated by simulation execution in a three-dimensional virtual space is illustrated on the right side.

In the embodiment, in the image of Fig. 21, the display mode of the code being executed in a simulator among the plurality of codes of the control program can be made different from another code. Accordingly, when detecting that the behavior of objects OB1 and OB2 of field device 90 during the simulation is abnormal from the screen information in Fig. 21, the user compares the code of the control program executed at the time of the detection with the code of the original control program indicated by the design drawing. Based on the result of the comparison, it can be determined whether the factor of the matter is a change in the program code.

### <K. Command transferred from conference room to field>

In the embodiment, command 12 of the operation command may be based on the voice by the utterance of the user during the conference. More specifically, Bot service unit 245 receives the voice data of the utterance of the user during the conference from terminal device 300, and converts the received voice data into command 12. Control device 100 executes command 12 received from Bot service unit 245, transfers result information 13 that is the execution result to Bot service unit 245, and outputs result information 13 by terminal device 300. For example, when "the proximity switch reaches the end of life" is determined as the factor of the matter of event code 152B, the user of terminal device 300 can transfer command 12 of the operation command "proximity switch replacement to the operator (user) of control device 100 by uttering "replace proximity switch". The operator of control device 100 replaces the proximity switch according to command 12, and transfers result information 13 indicating the replacement to terminal device 300 by utterance.

When the proximity switch is replaced, the user of terminal device 300 can also support the operator on the field side using an augmented reality mechanism. More specifically, the operator wears a head-mounted display type display device. The display device projects the video from terminal device 300 onto a transmissive half mirror of the display device to allow the operator to visually recognize the image as a stereoscopic video. The user of terminal device 300 transfers the video including the manual image for the proximity switch replacement as the video to control device 100 as command 12 of the operation command. Thus, the electronic conference system can provide the environment for a site operator to support the work eliminating the factor of the matter using the augmented reality mechanism.

### <L. Modifications>

In the embodiment, electronic conference management tool 240 updates correspondence history information 231 when the factor of the matter of event code 152B of convocation notice 11 is specified or the specified factor is eliminated in the conference. More specifically, in conference server 200, event code 152B of convocation notice 11, the date and time when the conference is held, the identifier of each user who is called to the conference, the factor of the specified matter, and the reference destination URL of the device relevant information used to specify the factor are associated with each other as event code 152B, the date and time 231A, corresponding related person ID 231B, matter factor 231C, and link 231D of the related information, and are added to correspondence history information 231.

In the embodiment, in order to hold the electronic conference, two types of notices of holding request notice 10 and convocation notice 11 are transmitted, but holding request notice 10 may be omitted. More specifically, Bot service unit 245 is provided in control device 100, so that convocation notice 11 for the electronic conference can be distributed from control device 100. Consequently, the processing (step 4d and step S10 in Fig. 12) for control device 100 to establish the Bot communication with conference server 200 can be omitted.

Furthermore, in the embodiment, correspondence history information 231 is configured to include related person ID 231B, factor 231C, and link 231D in association with event code 152B. Correspondence history information 231 may be configured to include at least one of related person ID 231B, factor 231C, and link 231D in association with event code 152B. In this case, notice processing unit 241 produces convocation notice 11 such that at least one of related person ID 231B, factor 231C, and link 231D included in correspondence history information 231 is set.

### <M. Appendix>

The above embodiment includes the following technical ideas.

### [Configuration 1]

A network system for an electronic conference in which a plurality of users interact by transmitting and receiving data by a plurality of computers connected to a network,
the plurality of computers including:
   at least one terminal device (300);
   a control device (100) configured to control a target (90); and
   a server device (200) configured to receive data including at least one of an image and a voice from at least one of the terminal device and the control device
   configured to be connected through the network in the electronic conference, and to distribute the received data to a device different from a transmission source of the data,
the control device including:
   means (102) configured to execute a control arithmetic operation; and
   detection means (181) configured to detect an event indicating a matter generated in association with the target from an operation state of the target according to control, and
   the network system including means configured to transmit a convocation notice (11) to an electronic conference in order to correspond to the event to at least one user to be involved in correspondence of the event through the network when detecting the event by the detection means.

### [Configuration 2]

The network system described in configuration 1, wherein
the control device includes a storage (108) configured to store setting information (154) defining a user who can access data held by the control device, and
the control device determines at least one user to be involved in correspondence of the event according to the setting information.

### [Configuration 3]

The network system described in configuration 1 or 2, wherein the control device performs outgoing call to start a network connection to the server device when detecting the event.

### [Configuration 4]

The network system described in any one of configurations 1 to 3, wherein the means configured to transmit a convocation notice (11) to an electronic conference is included in the control device.

### [Configuration 5]

The network system described in any one of configurations 1 to 4, wherein
the plurality of computers further includes a support device (400) configured to monitor an operational condition of the control device at a time of controlling the target
on a screen, and
in the electronic conference, the terminal device connected through the network outputs a screen based on information about the screen received from the support device connected through the network to a display (308) of the terminal device.

### [Configuration 6]

The network system described in configuration 5, wherein
in the electronic conference, the terminal device connected through the network transfers operation information received from a user of the terminal device to the support device connected through the network, and
the support device transfers information about the screen corresponding to the operation information from the terminal device to the terminal device.

### [Configuration 7]

The network system described in configuration 5 or 6, wherein the operational condition includes an operation state of the target that operates according to a command calculated by the control arithmetic operation.

### [Configuration 8]

The network system described in any one of configurations 1 to 7, wherein the network system includes means configured to store history information (231) indicating a history of a result of the correspondence for each type of the event for which the correspondence is performed.

### [Configuration 9]

The network system described in configuration 8, wherein
the history information includes user information (231B) identifying a user involved in the correspondence of the event in association with each type (152B) of the event for which the correspondence is performed, and
the means configured to transmit a convocation notice includes means configured to transmit the convocation notice to a user indicated by the user information in the history information associated with an event of a type identical to the event detected by the detection means.

### [Configuration 10]

The network system described in configuration 8 or 9, wherein
the correspondence of the event includes determining at least one factor of a matter indicated by the event,
the history information includes factor information (231C) indicating the at least one factor determined in response to the correspondence of the event in association with each type (152B) of the event for which the correspondence is performed, and
the means configured to transmit the convocation notice includes the factor Information in the history information associated with an event of the type identical to the event detected by the detection means, in the convocation notice to be transmitted.

### [Configuration 11]

The network system described in any one of configurations 8 to 10, wherein
the history information includes reference information (231D) referring to data distributed to the terminal device in an electronic conference for corresponding to the event in association with each type (152B) of the event for which the correspondence is performed, and
the means configured to transmit the convocation notice includes the reference information in the history information associated with an event of the type identical to the event detected by the detection means, in the convocation notice to be transmitted.

### [Configuration 12]

A control device (100) configured to control a target (90), the control device comprising:
communication means (116) configured to be capable of network-connecting to a server device (200) and at least one terminal device (300);
means (102) configured to perform a control arithmetic operation; and
detection means (181) configured to detect an event indicating a matter generated in association with the target from an operation state of the target according to control,
the server device receiving data including at least one of an image and a voice from at least one of the terminal device and the control device being connected through the network in an electronic conference, and distributing the received data to a device different from a transmission source of the data,
the terminal device including a terminal device capable of being operated by a user, and
the control device further including means configured to transmit a holding request (10) of the electronic conference in which at least one user to be involved in correspondence of the event being invited when detecting the event, to the server device through the network.

### [Configuration 13]

The control device described in configuration 12, wherein
the control device includes a storage (108) configured to store setting information (154) defining a user who can access data held by the control device, and
the control device determines at least one user to be involved in the correspondence of the event according to the setting information.

It should be considered that the disclosed embodiments are an example in all respects and not restrictive. The scope of the present invention is defined by not the description above, but the claims, and it is intended that all modifications within the meaning and scope of the claims are included in the present invention.

### REFERENCE SIGNS LIST

1: network system, 2: object facility, 4, 5, 700: VPN, 10: holding request notice, 11: convocation notice, 12: command, 13: result information, 22a, 323: access processing program, 90: field device, 100: control device, 150: setting information, 151, 171: screen, 152: event code information, 152A: matter type, 152B: event code, 152E: setting file, 154: device user management information, 156: device relevant information, 156A, 231D: link, 160: IoT gateway program, 161: event detection program, 162: information collection program, 163: state information collection, 164: control command collection, 165: device relevant information collection, 168, 228: VPN agent program, 169: agent, 180: electronic conference tool, 181: event detection unit, 182: holding request unit, 183: participant user determination unit, 184, 243: access processing unit, 200: conference server, 222: server program, 223: Bot service program, 224: conference operation program, 225: support tool program, 227: RDP program, 231: correspondence history information, 231A: date and time, 231C: factor, 232: device information, 240: electronic conference management tool, 241: notice processing unit, 242: additional user determination unit, 245: Bot service unit, 300: terminal device, 322: conference participation tool program, 400: support device, 600: VPN server, 154A: device person ID, 231B: related person ID

## Claims

1. A network system for an electronic conference in which a plurality of users interact by transmitting and receiving data by a plurality of computers connected to a network,
the plurality of computers including:
at least one terminal device;
a control device configured to control a target; and
a server device configured to receive data including at least one of an image and a voice from at least one of the terminal device and the control device configured to be connected through the network in the electronic conference, and to distribute the received data to a device different from a transmission source of the data,
the control device including:
means configured to execute a control arithmetic operation; and
detection means configured to detect an event indicating a matter generated in association with the target from an operation state of the target according to control, and
the network system including means configured to transmit a convocation notice to an electronic conference in order to correspond to the event to at least one user to be involved in correspondence of the event through the network when detecting the event by the detection means.

2. The network system according to claim 1, wherein
the control device includes a storage configured to store setting information defining a user who can access data held by the control device, and
the control device determines at least one user to be involved in correspondence of the event according to the setting information.

3. The network system according to claim 1 or 2, wherein the control device performs outgoing call to start a network connection to the server device when detecting the event.

4. The network system according to any one of claims 1 to 3, wherein the means configured to transmit a convocation notice to an electronic conference is included in the control device.

5. The network system according to any one of claims 1 to 4, wherein
the plurality of computers further includes a support device configured to monitor an operational condition of the control device at a time of controlling the target on a screen, and
in the electronic conference, the terminal device connected through the network outputs a screen based on information about the screen received from the support device connected through the network to a display of the terminal device.

6. The network system according to claim 5, wherein
in the electronic conference, the terminal device connected through the network transfers operation information received from a user of the terminal device to the support device connected through the network, and
the support device transfers information about the screen corresponding to the operation information from the terminal device to the terminal device.

7. The network system according to claim 5 or 6, wherein the operational condition includes an operation state of the target that operates according to a command calculated by the control arithmetic operation.

8. The network system according to any one of claims 1 to 7, wherein the network system includes means configured to store history information indicating a history of a result of the correspondence for each type of the event for which the correspondence is performed.

9. The network system according to claim 8, wherein
the history information includes user information identifying a user involved in the correspondence of the event in association with each type of the event for which the correspondence is performed, and
the means configured to transmit a convocation notice includes means configured to transmit the convocation notice to a user indicated by the user information in the history information associated with an event of a type identical to the event detected by the detection means.

10. The network system according to claim 8 or 9, wherein
the correspondence of the event includes determining at least one factor of a matter indicated by the event,
the history information includes factor information indicating the at least one factor determined in response to the correspondence of the event in association with each type of the event for which the correspondence is performed, and
the means configured to transmit a convocation notice includes the factor information in the history information associated with an event of the type identical to the event detected by the detection means, in the convocation notice to be transmitted.

11. The network system according to any one of claims 8 to 10, wherein
the history information includes reference information referring to data distributed to the terminal device in an electronic conference for corresponding to the event in association with each type of the event for which the correspondence is performed, and
the means configured to transmit a convocation notice includes the reference information in the history information associated with an event of the type identical to the event detected by the detection means, in the convocation notice to be transmitted.

12. A control device configured to control a target, the control device comprising:
communication means configured to be capable of network-connecting to a server device and at least one terminal device;
means configured to perform a control arithmetic operation; and
detection means configured to detect an event indicating a matter generated in association with the target from an operation state of the target according to control,
the server device receiving data including at least one of an image and a voice from at least one of the terminal device and the control device being connected through the network in an electronic conference, and distributing the received data to a device different from a transmission source of the data,
the terminal device including a terminal device capable of being operated by a user, and
the control device further including means configured to transmit a holding request of the electronic conference in which at least one user to be involved in correspondence of the event being invited when detecting the event, to the server device through the network.

13. The control device according to claim 12, wherein
the control device includes a storage configured to store setting information defining a user who can access data held by the control device, and
the control device determines at least one user to be involved in the correspondence of the event according to the setting information.
